# EUROPÄISCHE PATENTANMELDUNG

(11) **EP 4 817 987 A1**
(43) Veröffentlichungstag der Anmeldung: **07.10.2026**
(21) Anmeldenummer: 26162492.8
(22) Anmeldetag: 05.03.2026
(51) Int. Cl.: B61D 17/22, B61D 37/00, B60D 5/00

(54) **FLEXIBLE HALTERUNG IM ÜBERGANG ZWISCHEN ZWEI WAGONS EINES SCHIENENFAHRZEUGS**

(30) Priorität: 04.04.2025 DE 102025113305
(71) Anmelder: Siemens Mobility GmbH, 80997 München (DE)
(72) Erfinder: Lüdtke, Eric, 47829 Krefeld (DE); Wanczura, Stefan, 47829 Krefeld (DE)
(74) Vertreter: Siemens Patent Attorneys

(57) **Zusammenfassung**

Die Erfindung betrifft eine flexible Halterung (12). Die flexible Halterung (12) weist zwei Verankerungselemente (14a, 14b, 3, 4a) zur Verankerung der flexiblen Halterung (12) an zwei Stirnwandverkleidungen (1a, 1b) von zwei miteinander gekoppelten Wagons (151a, 151b) eines Schienenfahrzeugs (150) auf. Dabei ist ein erstes Verankerungselement (14a, 4a) mit der Stirnwandverkleidung (1a) eines ersten Wagons (151a) verbunden und ein zweites Verankerungselement (14b, 3) mit der Stirnwandverkleidung (1b) eines zweiten Wagons (151b) verbunden. Die flexible Halterung (12) weist auch relativ zu den Verankerungselementen (14a, 14b, 3, 4a) bewegliche Ausgleichskomponenten (16, 4b, 4c, 4d, 5, 6, 7) auf, welche mit den Verankerungselementen (14a, 14b, 3, 4a) beweglich verbunden sind, zum Ausgleich der Relativbewegungen der Stirnwandverkleidungen (1a, 1b) zueinander. Die flexible Halterung (12) umfasst auch mindestens ein Befestigungselement (18), welches mit den Ausgleichskomponenten (16, 4b, 4c, 4d, 5, 6, 7) beweglich verbunden ist, zum Halten eines im Wagenübergang (10) zwischen den beiden miteinander gekoppelten Wagons (151a, 151b) angeordneten Objekts (2). Weiterhin wird ein Schienenfahrzeug (150) beschrieben. Es wird auch ein Verfahren zur Montage einer flexiblen Halterung (12) beschrieben.

## Beschreibung

Die Erfindung betrifft eine flexible Halterung. Darüber hinaus betrifft die Erfindung ein Schienenfahrzeug mit einer solchen flexiblen Halterung. Außerdem betrifft die Erfindung ein Verfahren zur Montage einer flexiblen Halterung.

Im Übergang zwischen zwei Wagons eines Schienenfahrzeugs stoßen die beiden Stirnflächen der beiden Wagons aufeinander. Die beiden Wagons müssen genügend Abstand zueinander haben, damit sie sich bei einer Richtungsänderung, insbesondere einer Kurvenfahrt oder Kuppenfahrt, relativ zueinander bewegen können. Der dafür notwendige Zwischenraum ist durch eine drehbare Plattform und flexible Verkleidungselemente, wie zum Beispiel ein Faltenbalg, abgedeckt und kann auch als Aufenthaltsbereich für Fahrgäste dienen. Nutzungsgemäß können sich Fahrgäste in diesem Wagenübergangsbereich aufhalten, sodass die Anordnung eines Monitors, auf dem Informationen für die Fahrgäste, insbesondere über den weiteren Verlauf der Bahnfahrt, angezeigt werden, für die Fahrgäste von Vorteil ist.

Dieser Monitor muss so in dem Wagenübergang, also zwischen den beiden Wagenenden im Bereich des Faltenbalgs, positioniert werden, dass der Monitor möglichst wenig die Sicht in Fahrzeuglängsrichtung behindert und auch bei allen möglichen Fahrsituationen, also insbesondere bei Kurvenfahrt und Kuppenfahrt, kollisionsfrei zu angrenzenden Fahrzeugkomponenten, insbesondere den Verkleidungen, Haltestangen und dem Faltenbalg, bleibt. Weiterhin müssen nicht nur Kollisionen verhindert werden, sondern es muss auch ein Mindestabstand des Monitors zu den angrenzenden Fahrzeugkomponenten eingehalten werden, damit sich Fahrgäste nicht durch Quetschvorgänge verletzten können.

Herkömmlich wurden Monitore im Wagenübergangsbereich starr an angrenzende Strukturen, wie zum Beispiel eine Haltestange oder die Stirnwand eines der beiden miteinander gekoppelten Wagen, angebracht. Durch die unvermeidlichen Ausdrehbewegungen der Wagenkästen zueinander sind dabei die erforderlichen Mindestabstände zu benachbarten Bauteilen relativ groß, damit eine Verletzung von Fahrgästen durch Quetschung oder eine Kollision zuverlässig vermieden werden können.

Ein im Wagenübergangsbereich positionierter Monitor muss die Kräfte von etwa 1000 Newton, bei sehr schweren Personen sogar noch mehr, in alle Richtungen aufnehmen können, um einem stürzenden, sich am Monitor festhaltenden Fahrgast ausreichend Sicherheit zu bieten und um der Vandalismus-Gefahr eine ausreichende Stabilität entgegenzusetzen. Außerdem ist es das Ziel, die Halterung eines im Wagenübergang positionierten Bauteils lagefixiert auszuführen, also nicht derart flexibel, dass Fahrgäste das Bauteil bewegen könnten. Gleichzeitig müssen die Nick-, Knick- bzw. Neige- und Wankbewegungen des Schienenfahrzeugs aufgenommen bzw. kompensiert werden können.

Es besteht also die Aufgabe, eine flexible Halterung für ein Objekt, insbesondere ein Monitor, in einem Wagenübergang bereitzustellen, welche Sicherheitsanforderungen genügt und gleichzeitig weniger Platzanforderungen stellt, als es bei herkömmlichen Halterungen der Fall ist.

Diese Aufgabe wird durch eine flexible Halterung gemäß Patentanspruch 1, ein Schienenfahrzeug gemäß Patentanspruch 14 und ein Verfahren zur Montage einer flexiblen Halterung gemäß Patentanspruch 15 gelöst.

Die erfindungsgemäße flexible Halterung umfasst zwei Verankerungselemente zur Verankerung der flexiblen Halterung an zwei Stirnwandverkleidungen von zwei miteinander gekoppelten Wagons eines Schienenfahrzeugs. Dabei ist ein erstes Verankerungselement mit der Stirnwandverkleidung eines ersten Wagons der beiden miteinander gekoppelten Wagons verbunden und ist ein zweites Verankerungselement mit der Stirnwandverkleidung eines zweiten Wagons der beiden miteinander gekoppelten Wagons verbunden. Die Anordnung der Verankerungselemente erlaubt eine Positionierung eines Objekts, vorzugsweise eines Monitors im Wagenübergang zwischen den Stirnwandverkleidungen von aneinander gekoppelten Wagons.

Die flexible Halterung umfasst auch relativ zu den Verankerungselementen bewegliche Ausgleichskomponenten, welche mit den Verankerungselementen beweglich verbunden sind, zum Ausgleich der Relativbewegungen der Stirnwandverkleidungen zueinander. Vorteilhaft kompensieren die beweglichen Ausgleichskomponenten Nickbewegungen, Wankbewegungen und Neigebewegungen der aneinandergekoppelten Wagons. D.h. die beweglichen Ausgleichskomponenten verhindern die Übertragung der genannten Bewegungen der aneinandergekoppelten Wagons auf das von der flexiblen Halterung gehaltene Objekt.

Teil der flexiblen Halterung ist auch mindestens ein Befestigungselement, welches mit den Ausgleichskomponenten beweglich verbunden ist, zum Halten eines im Wagenübergang zwischen den beiden miteinander gekoppelten Wagons angeordneten Objekts, vorzugsweise eines Monitors. Vorteilhaft wird die Position des Objekts infolge der Flexibilität des Halters im Wagenübergang stabilisiert, auch wenn sich die beiden den Wagenübergang bildenden aneinandergekoppelten Wagons relativ zueinander bewegen. Die flexible Halterung weist eine mechanisch einfache passive Kinematik auf und benötigt keine zusätzlichen aktiven Stellelemente. Weiterhin wird im Vergleich zu einer starren Halterung der Raumbedarf im Wagenübergang reduziert, da das zu haltende Objekt im Vergleich zu einem Objekt, welches an einer starren Halterung befestigt ist, nicht mehr so weit von der Innenwand des Wagenübergangs entfernt positioniert werden muss, da aufgrund der reduzierten Relativbewegung des Objekts zu den Stirnwänden der aneinandergekoppelten Wagons die Amplitude der Bewegung des Objekts relativ zu den Stirnwänden reduziert ist. Durch die Anordnung der Ausgleichskomponenten an den beiden Stirnwänden wird eine Zwangsmitführung des Objekts bei Kurvenfahrten erreicht, so dass keine Bauteilzwängungen in der Kinematik der Aufhängung des Objekts bei Kurvenfahrt verursacht werden. Aufgrund der so ermöglichten Positionierung des Objekts näher an der Innenwand des Wagenübergangs wird auch die Sicht in Fahrzeuglängsrichtung verbessert.

Das erfindungsgemäße Schienenfahrzeug weist zwei miteinander gekoppelte Wagons und eine erfindungsgemäße flexible Halterung, welche an den beiden einander gegenüberliegenden Stirnwandverkleidungen der beiden Wagons verankert ist, auf. Das erfindungsgemäße Schienenfahrzeug weist also mindestens eine flexible Halterung in einem Wagenübergang zwischen zwei Wagons auf. Das erfindungsgemäße Schienenfahrzeug teilt die Vorteile der erfindungsgemäßen flexiblen Halterung.

Bei dem erfindungsgemäßen Verfahren zur Montage einer flexiblen Halterung werden zwei Verankerungselemente zur Verankerung der flexiblen Halterung an zwei Stirnwandverkleidungen von zwei miteinander gekoppelten Wagons eines Schienenfahrzeugs verbunden. Dabei wird ein erstes Verankerungselement mit der Stirnwandverkleidung eines ersten Wagons der beiden miteinander gekoppelten Wagons verbunden und wird ein zweites Verankerungselement mit der Stirnwandverkleidung eines zweiten Wagons der beiden miteinander gekoppelten Wagons verbunden.

Weiterhin werden bewegliche Ausgleichskomponenten mit den Verankerungselementen zum Ausgleich der Relativbewegungen der Stirnwandverkleidungen zueinander beweglich verbunden.

Schließlich wird mindestens ein Befestigungselement mit den Ausgleichskomponenten zum Halten eines im Wagenübergang zwischen den beiden miteinander gekoppelten Wagons angeordneten Objekts beweglich verbunden. Das Verfahren zur Montage einer flexiblen Halterung teilt die Vorteile der flexiblen Halterung.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Variante der erfindungsgemäßen flexiblen Halterung umfasst das Objekt einen vorzugsweise in einer vertikalen Ebene ausgerichtet angeordneten Monitor zur Anzeige von Informationen für Fahrgäste. Die flexible Halterung erlaubt es aufgrund der Flexibilität, den Monitor relativ nahe an der Innenwand des Wagenübergangs zu positionieren, da die Wagenbewegungen durch die flexible Halterung zumindest teilweise ausgeglichen werden. Mithin haben Fahrgäste mehr Platz im Bereich des Wagenübergangs als bei einer festen Halterung. Außerdem wird aufgrund der Positionierung nahe der Innenwand des Wagenübergangs eine freie Durchsicht in Längsrichtung des Schienenfahrzeugs ermöglicht. Weiterhin werden die Bewegungen des Monitors bei Nick- und Neigebewegungen im Vergleich zu einer festen Halterung reduziert, so dass Fahrgäste auch bei solchen Bewegungen nicht durch Bewegungen des Monitors dabei gestört werden, wenn sie Daten von dem Monitor ablesen wollen.

In einer bevorzugten Ausgestaltung der erfindungsgemäßen flexiblen Halterung umfassen die Ausgleichskomponenten zwei mit den zwei Verankerungselementen und dem mindestens einen Befestigungselement beweglich verbundene Ausgleichsarme. Mit Hilfe der Ausgleichsarme lassen sich Relativbewegungen der miteinander gekoppelten Wagons ausgleichen, so dass die Bewegung eines an dem flexiblen Halter befestigten Objekts, insbesondere ein Monitor, reduziert wird.

In einer besonders bevorzugten Variante des flexiblen Halters umfassen die Ausgleichskomponenten ein Scherengelenk. Ein Scherengelenk bietet eine besonders stabile und trotzdem flexible Abstützung für ein zu haltendes Objekt. Ein Scherengelenk weist über ein Gelenk beweglich verbundene gekreuzte Ausgleichsarme auf, deren Momenten-Querkraft- oder Normalkraftverläufe sich nicht gegenseitig beeinflussen.

In einer Ausgestaltung der erfindungsgemäßen flexiblen Halterung sind die Ausgleichsarme v-förmig angeordnet. Dabei weisen beide Ausgleichsarme ein erstes Ende und ein zweites Ende auf. Die beiden Ausgleichsarme sind mit ihrem ersten Ende mit dem mindestens einen Befestigungselement schwenkbar verbunden und sind mit ihrem zweiten Ende mit unterschiedlichen Verankerungselementen schwenkbar verbunden. Die v-förmige Anordnung trägt zu einer Stabilisierung der flexiblen Halterung bei.

In einer Variante der erfindungsgemäßen flexiblen Halterung umfassen die Ausgleichskomponenten zwei übereinander angeordnete Ausgleichskomponenten. Vorteilhaft wird eine Belastung des Monitors oder eine Bewegung des Monitors in z-Richtung, also in vertikaler Richtung, aufgrund der verbesserten Stabilität der Halterung kompensiert bzw. vermieden.

In einer bevorzugten Ausgestaltung der flexiblen Halterung sind die übereinander angeordneten Ausgleichskomponenten durch eine vertikale Verbindung stabilisiert. Vorteilhaft werden die Ausgleichskomponenten in vertikaler Richtung verstärkt.

Die Ausgleichskomponenten sind optional in vertikaler Richtung v-förmig zueinander angeordnet. Vorteilhaft wird durch die v-förmige Anordnung die Halterung in vertikaler Richtung stabilisiert. Durch eine v-förmige Anordnung der Ausgleichskomponenten, insbesondere Einzellenker zueinander, wird ein Absacken des zu haltenden Objekts, insbesondere des Monitors, durch sein Eigengewicht vermieden. Durch die v-förmige Anordnung wirken auf die Einzellenker nur Zugkräfte und Druckkräfte und keine Biegemomente. Das "v" wird in der y-z-Ebene gebildet, wobei das "v" in Querrichtung ausgerichtet ist. Die y-z-Ebene wird von der Querrichtung, also der y-Richtung und der vertikalen Richtung, also der z-Richtung gebildet.

Bevorzugt umfassen die zwei Verankerungselemente der erfindungsgemäßen flexiblen Halterung ein Loslager und ein Festlager. Das Loslager ermöglicht eine Verschiebung des

Loslagers in Längsrichtung des Schienenfahrzeugs, wodurch die Ausgleichskomponenten eine Anpassungsbewegung an eine Relativbewegung der aneinandergekoppelten Wagons zueinander ausführen. Als Loslager soll ein Lager verstanden werden, welches sich relativ zu einer Basis, insbesondere einer Stirnwandverkleidung bewegen, insbesondere verschieben lässt. Dabei verläuft die Bewegung quer bzw. parallel zur Stirnwand. Das Loslager bzw. das Verankerungselemente bleibt also in Kontakt mit der Stirnwand, auch wenn es sich parallel zur Stirnwand bewegt.

In einer bevorzugten Ausgestaltung der erfindungsgemäßen flexiblen Halterung umfassen die beweglichen Ausgleichskomponenten zwei bewegliche Schieber und ein Symmetrisierungselement zwischen den beiden beweglichen Schiebern, welches dazu ausgebildet ist, Horizontalbewegungen der beweglichen Schieber derart auszugleichen, dass das zwischen den beiden miteinander gekoppelten Wagons angeordnete Objekt exakt in der Mitte zwischen den beiden Verankerungselementen gehalten wird. Eine stets symmetrisch zu den Stirnwandverkleidungen positionierte Halterung ermöglicht es, dass Abstandsmaße zwischen dem Objekt und der Innenwand des Wagenübergangs halbiert werden. Außerdem werden durch die flexible Halterung alle Bewegungen der aneinandergekoppelten Wagons aufgenommen, während alle sonstigen Freiheitsgrade fixiert werden.

In einer bevorzugten Variante der erfindungsgemäßen flexiblen Halterung umfasst das Symmetrisierungselement einen Umlenkriemen, der auf zwei Umlenkrollen aufgespannt ist, die in horizontaler Richtung verteilt mit dem Gegenstand verbunden sind. Vorteilhaft wird durch den Umlenkriemen eine auf eines der beiden Verankerungselemente wirkende Bewegung auf beide beweglichen Schieber gleichmäßig verteilt, so dass das gehaltene Objekt zwischen den beiden Wagons mittig positioniert bleibt und eine Amplitude einer Relativbewegung des Objekts in Richtung der Innenwand des Wagenübergangs im Vergleich zu dem Verhalten einer starren Halterung halbiert wird. Hierzu sind die Schieber mit an ihnen fest montierten Klemmelementen mit dem Umlenkriemen verbunden, wodurch eine symmetrische Positionierung des von der flexiblen Halterung gehaltenen Objekts erreicht wird. Die Schieber sind vorzugsweise mit Gleitrollen oder Schubladenschienen, welche an dem zu haltenden Objekt befestigt sind, in Längsrichtung gleitend mit dem Objekt verbunden. Die beweglichen Schieber sind wiederum flexibel gelagert, relativ zu den Stirnwandverkleidungen bzw. Stirnwänden der aneinandergekoppelten Wagons. Umgekehrt halbiert sich der für eine Vermeidung einer Klemm- und Quetschgefahr, insbesondere für Kinder, gesundheitlich beeinträchtigte oder ältere Personen benötigte Freiraum zwischen dem Objekt und der Innenwand des Wagenübergangs.

Bevorzugt sind die Schieber der erfindungsgemäßen flexiblen Halterung mittels Klemmelementen mit dem Umlenkriemen fest verbunden und sind die Klemmelemente so positioniert, dass eine symmetrische Positionierung des Objekts erreicht wird.

Bevorzugt umfassen die beweglichen Schieber des erfindungsgemäßen flexiblen Halters in einer alternativen Ausgestaltung horizontal verlaufende Zahnstangen und das Symmetrisierungselement umfasst ein Zahnrad, das mit dem zwischen den beiden miteinander gekoppelten Wagons angeordneten Objekt verbunden ist, wobei die beiden beweglichen Schieber, in diesem Fall die Zahnstangen, und das Zahnrad derart relativ zueinander angeordnet sind, dass sich das Zahnrad zwischen den beiden Zahnstangen befindet und in die beiden Zahnstangen derart eingreift, dass bei einer horizontalen Relativbewegung der beiden Schieber zueinander das Zahnrad gedreht wird und durch seine Drehung das Objekt genau in der Mitte zwischen den beiden Verankerungselementen hält.

Alternativ kann das Symmetrisierungselement auch einen nur um eine Umlenkrolle geführten Riemen umfassen, dessen Enden direkt an den beweglichen Schiebern befestigt und gespannt werden. Der Riemen erfüllt zusammen mit der Umlenkrolle die Ausgleichsfunktion, um das Objekt in der Mitte zwischen den beiden Verankerungselementen zu halten. Vorteilhaft ist der Ressourcenaufwand für das Bilden der genannten Ausgleichsfunktion weiter verringert.

Die Erfindung wird im Folgenden unter Hinweis auf die beigefügten Figuren anhand von Ausführungsbeispielen noch einmal näher erläutert. Es zeigen:
- FIG 1: eine perspektivische Darstellung eines Wagenübergangs mit einer herkömmlichen Anordnung eines Monitors,
- FIG 2: eine schematische Draufsicht auf einen Wagenübergang mit einem Monitor mit einer flexiblen Halterung gemäß einem Ausführungsbeispiel der Erfindung und zusätzlich einer Seitenansicht der flexiblen Halterung,
- FIG 3: eine schematische Draufsicht auf eine flexible Halterung gemäß einem Ausführungsbeispiel der Erfindung mit zwei Teilansichten,
- FIG 4: eine Seitenansicht einer flexiblen Halterung gemäß einem Ausführungsbeispiel der Erfindung mit einem Monitor,
- FIG 5: eine Draufsicht auf die in FIG 5 dargestellte flexible Halterung,
- FIG 6: eine Draufsicht auf eine flexible Halterung mit einem Monitor gemäß einem alternativen Ausführungsbeispiel der Erfindung,
- FIG 7: eine Seitenansicht einer flexiblen Halterung gemäß einem Ausführungsbeispiel der Erfindung,
- FIG 8: eine Veranschaulichung des Problems der Platzierung eines Monitors,
- FIG 9: schematische Darstellungen von unterschiedlichen Auslenkungen von aneinander gekoppelten Wagons,
- FIG 10: eine Draufsicht auf eine flexible Halterung gemäß einem alternativen Ausführungsbeispiel,
- FIG 11: eine Rückseitenansicht der in FIG 10 gezeigten flexiblen Halterung,
- FIG 12: eine Schnittansicht aus der x-Richtung auf eine z-rotatorische, sonst aber gesperrte Lagerung,
- FIG 13: eine Ansicht aus der y-Richtung auf die bereits in FIG 12 gezeigte Lagerung,
- FIG 14: eine Schnittansicht aus der z-Richtung auf die bereits in FIG 12 und FIG 13 gezeigte Lagerung,
- FIG 15: eine schematische Darstellung eines Schienenfahrzeugs gemäß einem Ausführungsbeispiel der Erfindung,
- FIG 16: ein Flussdiagramm, welches ein Verfahren zur Montage einer flexiblen Halterung gemäß einem Ausführungsbeispiel der Erfindung veranschaulicht.

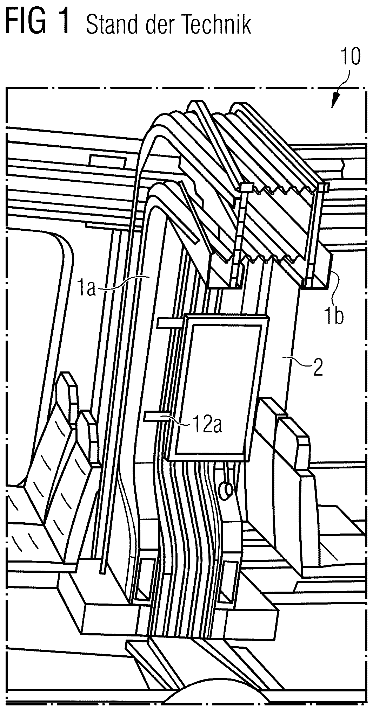

In FIG 1 ist eine perspektivische Darstellung eines Wagenübergangs 10 gezeigt. In dem Bereich des Wagenübergangs 10 ist ein Monitor 2 in herkömmlicher Weise angeordnet, der durch eine feste Halterung 12a an einer Stirnwandverkleidung 1a der beiden Stirnwandverkleidungen 1a, 1b eines der beiden Wagons des Wagenübergangs 10 fixiert ist.

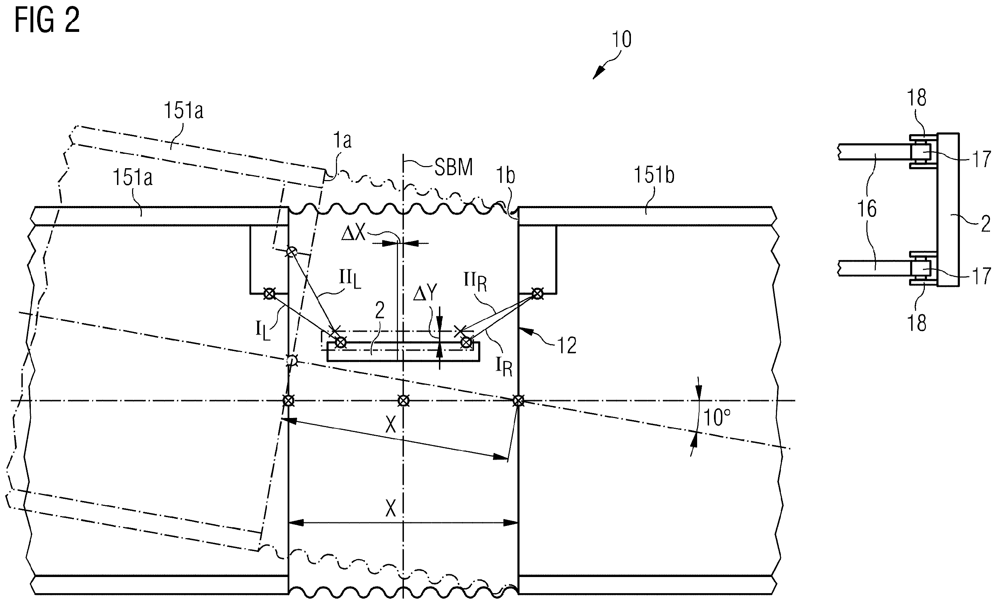

In FIG 2 ist eine schematische Draufsicht auf einen Wagenübergang 10 zwischen einem ersten Wagon 151a und einem zweiten Wagon 151b mit einem Monitor 2 mit einer flexiblen Halterung 12 gemäß einem Ausführungsbeispiel der Erfindung veranschaulicht. In FIG 2 sind zwei Szenarien in einer Zeichnung gezeigt, nämlich ein erstes Szenario, bei dem das Schienenfahrzeug (nicht gezeigt), dessen Bestandteil der in FIG 2 gezeigte Wagenübergang 10 ist, geradeausfährt, und ein zweites Szenario, bei dem das Schienenfahrzeug durch eine Kurve fährt. Der linke Wagon bzw. erste Wagon 151a ist hierzu doppelt für die beiden erwähnten Szenarien gezeichnet. Teil der Draufsicht sind auch die Stirnwände 1a, 1b der beiden Wagons 151a, 151b. In FIG 2 ist zusätzlich eine Seitenansicht der flexiblen Halterung 12 im oberen rechten Eck der Zeichnung gezeigt. In der Seitenansicht sind zwei übereinander angeordnete Ausgleichsarme 16 zu erkennen sowie zwei übereinander angeordnete Lager 17, die mit Befestigungselementen 18 mit dem Monitor 2 beweglich verbunden sind und ein Schwenken des Monitors 2 als Ausgleichsbewegung zu einer Kurvenbewegung der beiden miteinander gekoppelten Wagons 151a, 151b erlauben. In FIG 2 ist auch ein Abstand X zwischen den beiden Stirnwänden der Wagons 151a, 151b eingezeichnet sowie eine Änderung ΔX der Position des Monitors 2 in x-Richtung, d. h. in Längsrichtung des Schienenfahrzeugs, welche auch eine entsprechende Abweichung von einer Mittelposition SBM zwischen den beiden Wagons 151a, 151b darstellt. Außerdem ist auch eine Änderung ΔY der Position des Monitors 2 in y-Richtung, d. h. in Querrichtung des Schienenfahrzeugs, dargestellt. Darüber hinaus sind auch Positionen der Ausgleichsarme 16 der flexiblen Halterung 12 dargestellt. Insbesondere sind zwei unterschiedliche Positionen I_{L}, II_{L} des linken Ausgleichsarms und zwei unterschiedliche Positionen I_{R}, II_{R} des rechten Ausgleichsarms der flexiblen Halterung 12 gezeigt. Die Positionen I_{L}, I_{R} entsprechen den Positionen der Ausgleichsarme 16 bei Geradeausfahrt und die Positionen II_{L}, II_{R} entsprechen den Positionen der Ausgleichsarme 16 bei Kurvenfahrt. In FIG 2 ist beispielhaft ein Winkel zwischen den Längsachsen der beiden Wagons 151a, 151b von 10° bei Kurvenfahrt gewählt.

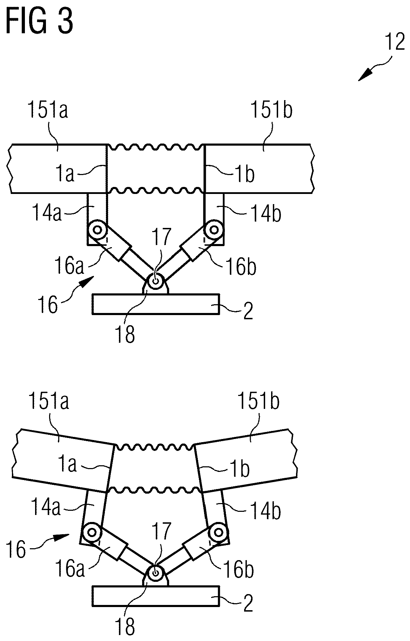

In FIG 3 ist eine Draufsicht auf eine flexible Halterung 12 eines Monitors gemäß einem Ausführungsbeispiel der Erfindung gezeigt. Die Draufsicht umfasst zwei Teilansichten, wobei eine obere Teilansicht ein Szenario zeigt, bei dem zwei aneinander gekoppelte Wagons 151a, 151b auf einer gerade verlaufenden Strecke positioniert sind, und eine untere Teilansicht zeigt ein Szenario, bei dem zwei aneinander gekoppelte Wagons 151a, 151b auf einer Kurvenstrecke angeordnet sind. In beiden Teilzeichnungen ist die flexible Halterung 12 zwischen zwei einander gegenüberliegenden Stirnwänden 1a, 1b von Wagons 151a, 151b angeordnet und über ein erstes Verankerungselement 14a und ein zweites Verankerungselement 14b mit den beiden Stirnwänden 1a, 1b verbunden. Zum beweglichen Ausgleich einer Relativbewegung der beiden Wagons 151 a, 151b zueinander ist ein zweigliedriger Ausgleichsarm 16 mit den beiden Verankerungselementen 14a, 14b beweglich verbunden. Dort, wo die beiden Glieder 16a, 16b des Ausgleichsarms 16 zusammentreffen, befindet sich ebenso wie dort, wo die beiden Glieder 16a, 16b des Ausgleichsarms 16 mit den jeweiligen Verankerungselementen 14a, 14b zusammentreffen, Lager 17, um eine Beweglichkeit der einzelnen Glieder 16a, 16b des Ausgleichsarms 16 zu ermöglichen. Das Lager 17 zwischen den beiden Gliedern 16a, 16b des Ausgleichsarms 16 ist auch mit einem Befestigungselement 18 verbunden, welches seinerseits mit einem Monitor 2 fest verbunden ist. Wie in der unteren Teilansicht zu erkennen ist, gleicht der Ausgleichsarm 16 die Kurvenbewegung der beiden Wagons 151a, 151b relativ zueinander aus, so dass die Bewegung des Monitors 2 in den Raum im Bereich des Wagenübergangs reduziert ist.

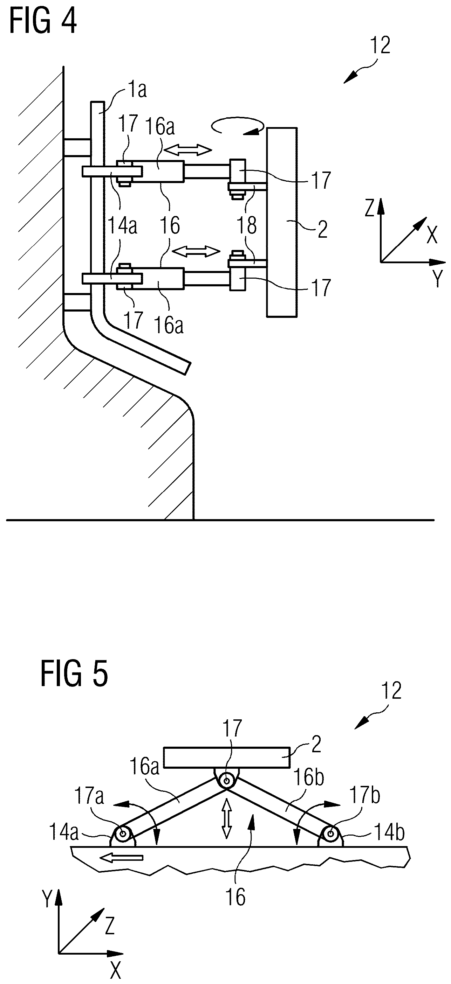

In FIG 4 ist eine Seitenansicht einer flexiblen Halterung 12 für einen Monitor 2 gemäß einem Ausführungsbeispiel der Erfindung gezeigt. Da in FIG 4 eine Seitenansicht dargestellt ist, sind in FIG 4 nur erste Verankerungselemente 14a gezeigt, die auf einer Stirnwandverkleidung 1a eines ersten Wagons befestigt sind. Wie man in FIG 4 erkennen kann, umfasst die flexible Halterung 12 in der in FIG 4 dargestellten Variante zwei übereinander angeordnete Ausgleichsarme 16, von denen aufgrund der Seitenansicht jeweils nur ein Glied 16a zu erkennen ist. Als weitere Komponente sind in FIG 4 Lager 17 zu erkennen, die die Glieder 16a, 16b (das jeweils zweite Glied 16b ist in FIG 4 aufgrund der Seitenansicht nicht gezeigt) der Ausgleichsarme 16 mit den Verankerungselementen 14a und dem Befestigungselement 18 schwenkbar verbinden. In FIG 4 ist auch ein Achsenkreuz mit Achsenrichtungen x, y, z dargestellt. Dabei zeigt die x-Achse in Längsrichtung eines Wagons, die y-Achse in Querrichtung eines Wagons und die z-Achse in vertikaler Richtung des Wagons.

In FIG 5 ist eine Draufsicht auf die in FIG 4 dargestellte flexible Halterung 2 gezeigt. Auch ein Achsenkreuz mit Achsenrichtungen x, y, z ist in FIG 5 nochmals dargestellt. Weiterhin sind Bewegungsrichtungen der Glieder 16a, 16b des Ausgleichsarms 16 in x-Richtung und in y-Richtung eingezeichnet. Das in FIG 5 gezeigte erste Verankerungselement 14a ist in x-Richtung verschiebbar, so dass der Ausgleichsarm 16 in x-Richtung und in y-Richtung seine Position verändern kann. Die zu den Verankerungselementen 14a, 14b und dem Monitor 2 hin angeordneten Lager 17 erlauben ein Schwenken der Glieder 16a, 16b des Ausgleichsarms 16. Das in FIG 5 links dargestellte Lager ist als sogenanntes Loslager 17a ausgebildet. Das in FIG 5 rechts dargestellte Lager ist als sogenanntes Festlager 17b ausgestaltet. Das Loslager 17a kann in x-Richtung bewegt werden, um eine Ausgleichsbewegung des Ausgleichsarms 16 in x-Richtung und in y-Richtung zu ermöglichen.

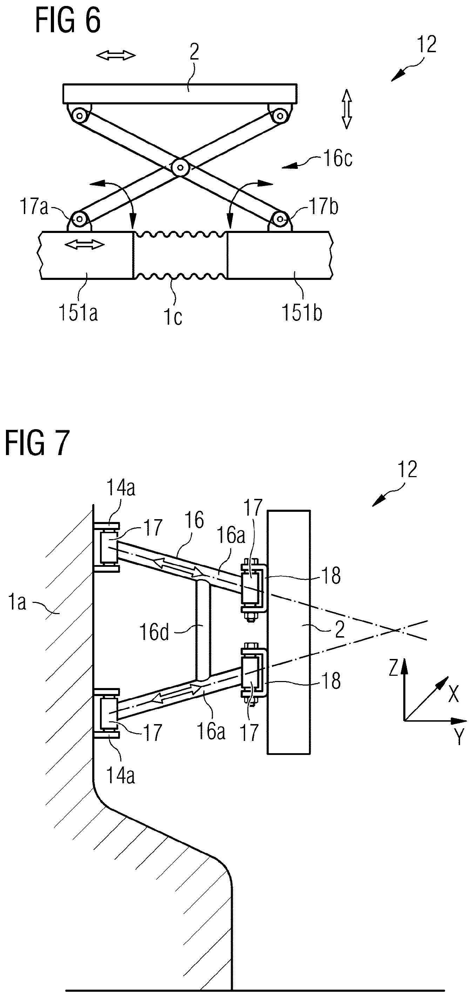

In FIG 6 ist eine Draufsicht auf eine flexible Halterung 12 mit einem Monitor 2 gemäß einem alternativen Ausführungsbeispiel der Erfindung gezeigt. Die in FIG 6 gezeigte flexible Halterung 12 weist einen Ausgleichsarm mit einem Scherengelenk 16c auf, welches einen Zwischenraum zwischen zwei Wagons 151a, 151b überspannt, der ebenfalls eine einseitig in x-Richtung lose Befestigung bzw. ein Loslager 17a an einer Stirnseite eines Wagons 151a (im Bild links) aufweist und ein Festlager 17b an der Stirnseite des anderen Wagons 151b (im Bild rechts) aufweist. Der Zwischenraum zwischen den beiden Wagons 151a, 151b wird durch eine flexible Verkleidung 1c gegenüber dem Innenraum abgedeckt.

In FIG 7 ist eine Seitenansicht einer flexiblen Halterung 12 gezeigt, welche einen Ausgleichsarm 16 mit in der y-z-Ebene v-förmiger Struktur aufweist, wobei die beiden sonst einzeln ausgebildeten Glieder 16a nun über eine vertikale Verbindungskomponente 16d miteinander stabil verstrebt sind, so dass der Monitor 2 sowie die flexible Halterung 12 Kräften, welche in vertikaler Richtung auf den Monitor 2 ausgeübt werden, zum Beispiel, wenn sich ein Fahrgast auf dem Monitor 2 abstützt, besser widerstehen können. Die Glieder 16a des Ausgleichsarms 16 sind über Lager 17 sowie erste Verankerungselemente 14a sowohl an der Stirnwandverkleidung 1a eines ersten Wagons beweglich befestigt (das Befestigungselement 18 am zweiten Wagon ist aufgrund der Seitenansicht in FIG 7 nicht zu erkennen) als auch an dem Monitor 2 beweglich befestigt. Weiterhin ist der Ausgleichsarm 16 über Lager 17 und Befestigungselemente 18 an dem Monitor 2 befestigt.

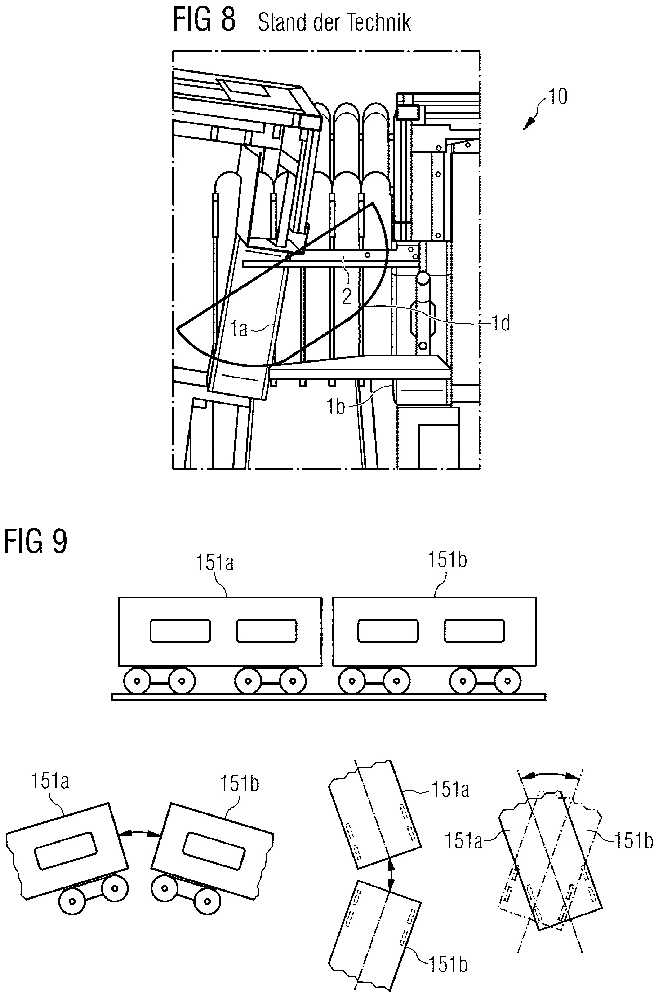

In FIG 8 ist das Problem der Platzierung eines Monitors 2 in einem Wagenübergang 10 dargestellt, wobei es darum geht, eine Kollision des Monitors 2 mit einer Stirnwandverkleidung 1a eines ersten Wagons zu vermeiden. Ein Bereich 1d, in dem die linke Stirnwandverkleidung 1a ausschwenken kann, ist in FIG 8 ebenfalls gezeigt. In FIG 8 sind zwei mögliche Positionen gezeigt, an denen der Monitor 2 positioniert sein könnte, wobei nur die eine Position so gewählt ist, dass der Monitor 2 stets außerhalb des Bereichs 1d liegt. Mit FIG 8 soll veranschaulicht werden, wie weit ein Monitor 2 bei herkömmlicher starrer Montage im Wagenübergang in den Fahrgastraum hineinragen muss, um zwischen Monitor 2 und der Stirnwandverkleidung 1a im Wagenübergang stets genügend Sicherheitsabstand zu gewährleisten, so dass ein erhöhtes Verletzungsrisiko für die Fahrgäste ausgeschlossen ist.

In FIG 9 sind unterschiedliche Auslenkungen von aneinander gekoppelten Wagons 151a, 151b gezeigt, wobei die Auslenkung um die y-Achse (Berg- und Talfahrt; unten ganz links im Bild, y-Achse ist die Querachse), um die z-Achse (Kurvenfahrt; unten in der Mitte im Bild, z-Achse ist die vertikale Achse) und um die x-Achse (Wankwinkel; unten rechts im Bild, x-Achse ist der Längsachse) erfolgt.

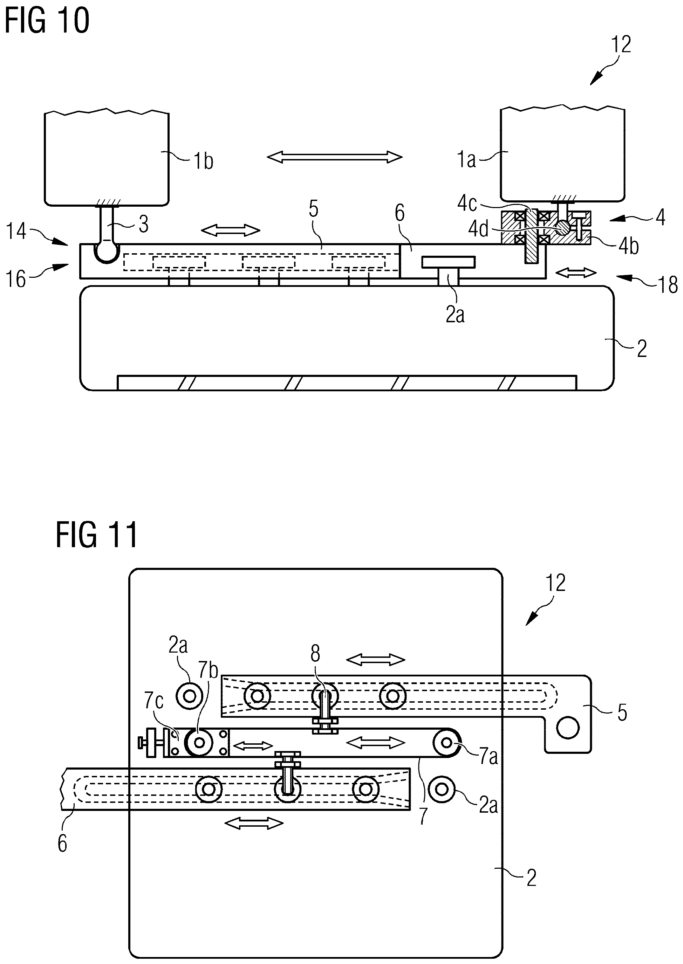

In FIG 10 ist eine Draufsicht auf eine flexible Halterung 12 gemäß einem alternativen Ausführungsbeispiel veranschaulicht. Die flexible Halterung 12 ist ebenfalls an zwei einander gegenüberliegenden Stirnwänden 1a, 1b befestigt. Die Verankerungselemente 14 umfassen hier ein bewegliches Lagerelement 3 mit Kugelgelenk (links in FIG 10 gezeigt), welches die Lagerung gegenüber allen rotatorischen Freiheitsgraden freigibt, und eine x-rotatorisch gesperrte Lagerung 4 (rechts im Bild), welche verhindert, dass rotatorische Bewegungen um die x-Achse erfolgen. Die x-rotatorisch gesperrte Lagerung 4 umfasst eine um die z-Achse bewegliche Welle 4a und eine um die y-Achse bewegliche Lagerung 4b, welche als Verbindungskörper dient, sowie eine um die z-Achse bewegliche Welle 4d.

Die flexible Halterung 12 umfasst als Ausgleichskomponenten 16 zur Aufnahme der Relativbewegungen der Stirnwände 1a, 1b einen oberen beweglichen Schieber 5 und einen unteren beweglichen Schieber 6. Die Schieber 5, 6 sind am Monitor 2 durch Gleitrollen 2a geführt, welche eine geführte Relativbewegung der Schieber 5, 6 zu dem Monitor 2 ermöglichen und Befestigungselemente 18 bilden.

Die Ausgleichskomponenten 16 umfassen auch ein Symmetrisierungselement, in diesem Ausführungsbeispiel einen Umlenkriemen 7 (siehe FIG 11, in FIG 10 nicht dargestellt), von dem die Relativbewegungen der beiden Schieber 5, 6 zueinander derart aufgenommen werden, dass eine symmetrische Positionierung des Monitors 2 zwischen den beiden einander gegenüberliegenden Stirnwänden 1a, 1b auch bei einer Relativbewegung dieser Stirnwände 1a, 1b zueinander aufrechterhalten bleibt.

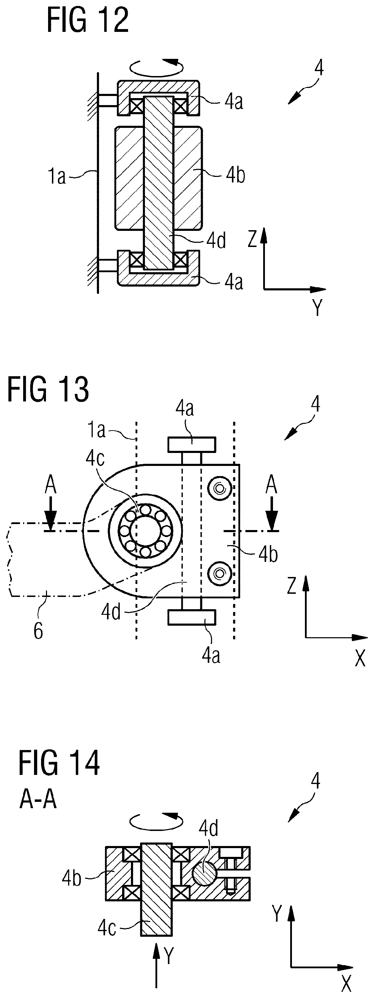

In FIG 11 ist eine Rückseitenansicht der in FIG 11 gezeigten flexiblen Halterung 12 veranschaulicht. In FIG 12 ist zu erkennen, wie der Umlenkriemen 7 zwischen dem oberen beweglichen Schieber 5 und dem unteren beweglichen Schieber 6 angeordnet ist. Weiterhin sieht man, dass der obere bewegliche Schieber 5 und der untere bewegliche Schieber 6 mit Hilfe von an den Schiebern 5, 6 fest montierten Klemmelementen 8 mit dem Umlenkriemen 7 verbunden sind, damit eine symmetrische Positionierung des Monitors 2 garantiert ist.

Der Umlenkriemen 7 umfasst eine erste Umlenkrolle 7a (rechts im Bild gezeigt) und eine zweite Umlenkrolle 7b (links im Bild gezeigt) und eine Riemenspanneinrichtung 7c (links im Bild), welche zur Aufrechterhaltung der Riemenspannung dient. Die Riemenspanneinrichtung 7c ist an dem Monitor 2 befestigt. In FIG 12 sind auch die Bewegungsrichtungen der Schieber 5, 6 und des Umlenkriemens 7 mit Pfeilen eingezeichnet. Weiterhin sind auch die bereits im Zusammenhang mit FIG 11 erwähnten Gleitrollen 2a, welche an dem Monitor 2 befestigt sind und in Führungsschienen, welche an den Schiebern 5, 6 ausgebildet sind, laufen und so eine Bewegung der Schieber 5, 6 relativ zu dem Monitor 2 in Längsrichtung ermöglichen und gleichzeitig eine Fixierung des Monitors 2 an den Schiebern 5, 6 bezüglich anderer Richtungen erlauben.

In FIG 12 ist eine Schnittansicht aus der x-Richtung auf eine x-rotatorisch gesperrte Lagerung 4 gezeigt. Die x-rotatorisch gesperrte Lagerung 4 umfasst eine um die z-Achse bewegliche Welle 4d, welche an der Stirnwandverkleidung 1a mittels zweier Lagerschalen 4a gelagert ist. Auf der Welle 4d ist ein Verbindungskörper 4b angeordnet.

In FIG 13 ist eine Ansicht aus der y-Richtung auf die bereits in FIG 12 gezeigte x-rotatorisch gesperrte Lagerung 4 gezeigt. Der Verbindungskörper 4b ist ausschließlich z-rotatorisch mit der Welle 4d in den Lagerschalen 4a gelagert und kann hierdurch x-rotatorischen Momenten widerstehen. Weiterhin ist eine Welle 4c gezeigt, welche um die y-Achse drehbar ist und mit dem unteren beweglichen Schieber 6 beweglich verbunden ist. Auch diese Lagerung kann x-rotatorischen Momenten widerstehen. In FIG 13 ist auch eine Schnittebene AA gezeigt, welche parallel zur xy-Ebene liegt. Dieser Schnitt verweist auf die Schnittdarstellung in FIG 14.

In FIG 14 ist eine Schnittansicht auf die AA-Ebene bzw. x-y-Ebene bzw. auf die in FIG 12 und FIG 13 aus anderen Sichtachsen bereits veranschaulichte Lagerung 4 gezeigt. In der Draufsicht ist die um die y-Achse drehbare Welle 4c von oben betrachtet gezeigt. Ebenfalls ist die um die z-Achse drehbare Welle 4d gezeigt. Weiterhin ist auch der Verbindungskörper 4b zwischen den beiden Wellen 4d, 4c zu sehen.

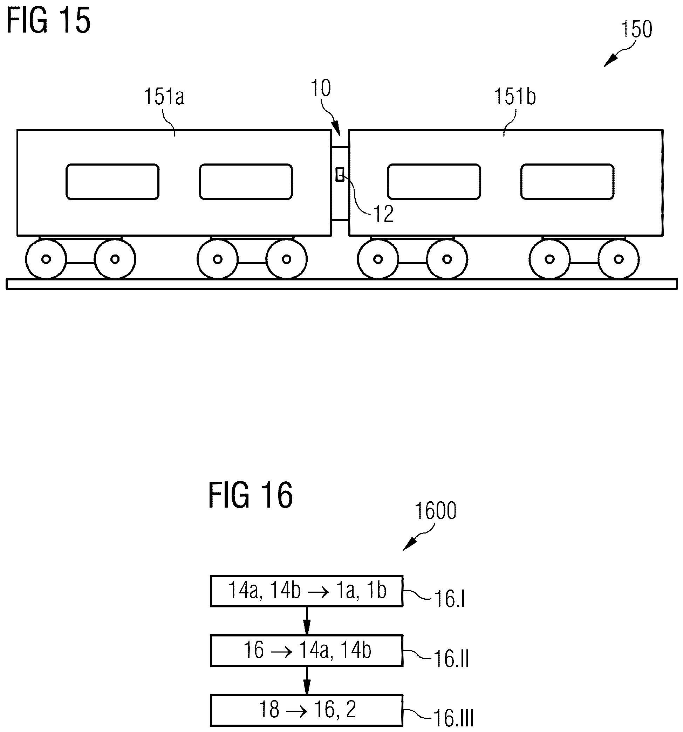

In FIG 15 ist eine schematische Darstellung eines Schienenfahrzeugs 150 gemäß einem Ausführungsbeispiel der Erfindung gezeigt. Das Schienenfahrzeug 150 weist zwei Wagons 151a, 151b auf und einen Wagenübergang 10 mit einer flexiblen Halterung 12, wie sie in FIG 2 bis FIG 8 und FIG 10 bis FIG 14 gezeigt ist.

In FIG 16 ist ein Flussdiagramm 1600, welches ein Verfahren zur Montage einer flexiblen Halterung gemäß einem Ausführungsbeispiel der Erfindung veranschaulicht, gezeigt.

Bei dem Schritt 16.I werden zwei Verankerungselemente 14a, 14b zur Verankerung der flexiblen Halterung 12 an zwei Stirnwandverkleidungen 1a, 1b von zwei miteinander gekoppelten Wagons eines Schienenfahrzeugs befestigt. Dabei wird ein erstes Verankerungselement 14a mit der Stirnwandverkleidung 1a eines ersten Wagons verbunden und wird ein zweites Verankerungselement 14b mit der Stirnwandverkleidung 1b eines zweiten Wagons verbunden.

Bei dem Schritt 16.II werden bewegliche Ausgleichskomponenten 16 mit den Verankerungselementen 14a, 14b zum Ausgleich der Relativbewegungen der Stirnwandverkleidungen 1a, 1b zueinander verbunden.

Schließlich wird bei dem Schritt 16.III mindestens ein Befestigungselement 18 mit den Ausgleichskomponenten 16 zum Halten eines im Wagenübergang zwischen den beiden miteinander gekoppelten Wagons angeordneten Objekts 2 beweglich verbunden.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Unabhängig vom grammatikalischen Geschlecht eines bestimmten Begriffes sind Personen mit männlicher, weiblicher oder anderer Geschlechteridentität mit umfasst.

## Patentansprüche

1. Flexible Halterung (12), aufweisend:
- zwei Verankerungselemente (14a, 14b, 3, 4a) zur Verankerung der flexiblen Halterung (12) an zwei Stirnwandverkleidungen (1a, 1b) von zwei miteinander gekoppelten Wagons (151a, 151b) eines Schienenfahrzeugs (150), wobei ein erstes Verankerungselement (14a, 4a) mit der Stirnwandverkleidung (1a) eines ersten Wagons (151a) der beiden miteinander gekoppelten Wagons (151a, 151b) verbunden ist und ein zweites Verankerungselement (14b, 3) mit der Stirnwandverkleidung (1b) eines zweiten Wagons (151b) der beiden miteinander gekoppelten Wagons (151a, 151b) verbunden ist,
- relativ zu den Verankerungselementen (14a, 14b, 3, 4a) bewegliche Ausgleichskomponenten (16, 4b, 4c, 4d, 5, 6, 7), welche mit den Verankerungselementen (14a, 14b, 3, 4a) beweglich verbunden sind, zum Ausgleich der Relativbewegungen der Stirnwandverkleidungen (1a, 1b) zueinander,
- mindestens ein Befestigungselement (18, 2a), welches mit den Ausgleichskomponenten (16) beweglich verbunden ist, zum Halten eines im Wagenübergang (10) zwischen den beiden miteinander gekoppelten Wagons (151a, 151b) angeordneten Objekts (2).

2. Flexible Halterung nach Anspruch 1,
wobei das Objekt einen in einer vertikalen Ebene angeordneten Monitor (2) zur Anzeige von Informationen für Fahrgäste umfasst.

3. Flexible Halterung nach Anspruch 1 oder 2,
wobei die Ausgleichskomponenten (16, 5, 6, 7) zwei mit den zwei Verankerungselementen (14a, 14b, 3, 4a) und dem mindestens einen Befestigungselement (18, 2a) beweglich verbundene Ausgleichsarme (16a, 16b, 5, 6) umfassen.

4. Flexible Halterung nach Anspruch 3,
wobei die Ausgleichskomponenten (16) ein Scherengelenk (16c) umfassen.

5. Flexible Halterung nach Anspruch 3 oder 4,
wobei die Ausgleichsarme (16a, 16b) v-förmig angeordnet sind, wobei beide Ausgleichsarme (16a, 16b) ein erstes Ende und ein zweites Ende aufweisen und mit ihrem ersten Ende mit dem mindestens einen Befestigungselement (18) schwenkbar verbunden sind und mit ihrem zweiten Ende mit den Verankerungselementen (14a, 14b) schwenkbar verbunden sind.

6. Flexible Halterung nach einem der vorstehenden Ansprüche,
wobei die Ausgleichskomponenten (16) zwei übereinander angeordnete Ausgleichskomponenten (16) umfassen.

7. Flexible Halterung nach Anspruch 6,
wobei die übereinander angeordneten Ausgleichskomponenten (16) durch eine vertikale Verbindung (16d) stabilisiert sind.

8. Flexible Halterung nach einem der vorstehenden Ansprüche 6 oder 7,
wobei die Ausgleichskomponenten (16) in vertikaler Richtung v-förmig zueinander angeordnet sind.

9. Flexible Halterung nach einem der vorstehenden Ansprüche,
wobei die zwei Verankerungselemente (14a, 14b) ein Loslager (17a) und ein Festlager (17b) umfassen.

10. Flexible Halterung nach einem der vorstehenden Ansprüche 1 bis 3 oder 6,
wobei die beweglichen Ausgleichskomponenten (16) zwei bewegliche Schieber (5, 6) und ein Symmetrisierungselement zwischen den beiden beweglichen Schiebern (5, 6) umfassen, welches dazu ausgebildet ist, Horizontalbewegungen der Schieber (5, 6) derart auszugleichen, dass das zwischen den beiden miteinander gekoppelten Wagons (151a, 151b) angeordnete Objekt (2) exakt in der Mitte zwischen den beiden Verankerungselementen (3, 4a) gehalten wird.

11. Flexible Halterung nach Anspruch 10,
wobei das Symmetrisierungselement einen Umlenkriemen (7) umfasst,
der auf zwei Umlenkrollen (7a, 7b) aufgespannt ist, die in horizontaler Richtung verteilt mit dem Objekt (2) verbunden sind.

12. Flexible Halterung nach Anspruch 11,
wobei die Schieber (5, 6) mittels Klemmelementen (8) mit dem Umlenkriemen (7) fest verbunden sind und die Klemmelemente (8) so positioniert sind, dass eine symmetrische Positionierung des Objekts (2) erreicht wird.

13. Flexible Halterung nach Anspruch 10,
wobei die beweglichen Schieber (5, 6) horizontal verlaufende Zahnstangen umfassen und das Symmetrisierungselement ein Zahnrad umfasst, das mit dem zwischen den beiden miteinander gekoppelten Wagons (151a, 151b) angeordneten Objekt (2) verbunden ist, wobei die beiden beweglichen Schieber (5, 6) und das Zahnrad derart relativ zueinander angeordnet sind, dass sich das Zahnrad zwischen den beiden Zahnstangen befindet und in die beiden Zahnstangen derart eingreift, dass bei einer horizontalen Relativbewegung der beiden Schieber (5, 6) zueinander das Zahnrad gedreht wird und durch seine Drehung das Objekt (2) in der Mitte zwischen den beiden Verankerungselementen (3, 4a) hält.

14. Schienenfahrzeug (150), aufweisend zwei miteinander gekoppelte Wagons (151a, 151b) und eine flexible Halterung (2) nach einem der vorstehenden Ansprüche, welche an den beiden einander gegenüberliegenden Stirnwandverkleidungen (1a, 1b) der beiden Wagons (151a, 151b) verankert ist.

15. Verfahren zur Montage einer flexiblen Halterung (12) nach einem der vorstehenden Ansprüche 1 bis 13,
aufweisend die Schritte:
- Ausbilden von zwei Verankerungselementen (14a, 14b, 3, 4a) zur Verankerung der flexiblen Halterung (12) an zwei Stirnwandverkleidungen (1a, 1b) von zwei miteinander gekoppelten Wagons (151a, 151b) eines Schienenfahrzeugs (150), wobei ein erstes Verankerungselement (14a, 4a) mit der Stirnwandverkleidung (1a) eines ersten Wagons (151a) der beiden miteinander gekoppelten Wagons (151a, 151b) verbunden wird und ein zweites Verankerungselement (14b, 3) mit der Stirnwandverkleidung (1b) eines zweiten Wagons (151b) der beiden miteinander gekoppelten Wagons (151a, 151b) verbunden wird,
- Bewegliches Verbinden von beweglichen Ausgleichskomponenten (16, 4b, 4c, 4d, 5, 6, 7) mit den Verankerungselementen (14a, 14b, 3, 4a) zum Ausgleich der Relativbewegungen der Stirnwandverkleidungen (1a, 1b) zueinander,
- Bewegliches Verbinden mindestens eines Befestigungselements (18, 2a) mit den Ausgleichskomponenten (16, 4b, 4c, 4d, 5, 6, 7) zum Halten eines im Wagenübergang (10) zwischen den beiden miteinander gekoppelten Wagons (151a, 151b) angeordneten Objekts (2).
